# EUROPÄISCHE PATENTSCHRIFT

(11) **EP 2 432 109 B1**
(45) Veröffentlichungstag und Bekanntmachung des Hinweises auf die Patenterteilung: **30.07.2014**
(21) Anmeldenummer: 11180513.1
(22) Anmeldetag: 08.09.2011
(51) Int. Cl.: H02M 7/219, H02M 7/483

(54) **Modularer Schalter für einen elektrischen Umrichter, elektrischer Umrichter sowie Verfahren zum Betreiben eines elektrischen Umrichters**
Modular switch for an electric converter, electric converter and method for operating an electric converter
Commutateur modulaire pour un convertisseur électrique, convertisseur électrique et procédé de fonctionnement d'un convertisseur électrique

(30) Priorität: 15.09.2010 DE 102010046142
(43) Veröffentlichungstag der Anmeldung: 21.03.2012
(73) Patentinhaber: GE Energy Power Conversion GmbH, 12277 Berlin (DE)
(72) Erfinder: Janning, Jörg, Dr., 12559 Berlin (DE); Salama, Samir, Dr., 13591 Berlin (DE)
(74) Vertreter: Serjeants LLP

(56) Entgegenhaltungen:
- MARQUARDT R: "Modular Multilevel Converter: An universal concept for HVDC-Networks and extended DC-Bus-applications", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21. Juni 2010 (2010-06-21), Seiten 502-507, XP031729731, ISBN: 978-1-4244-5394-8
- STEFFEN ROHNER ET AL: "Analysis and Simulation of a 6 kV, 6 MVA Modular Multilevel Converter", IECON 2009 - 35TH ANNUAL CONFERENCE OF IEEE INDUSTRIAL ELECTRONICS (IECON 2009) - 3-5 NOV. 2009 - PORTO, PORTUGAL, IEEE, PISCATAWAY, NJ, USA, 3. November 2009 (2009-11-03), Seiten 225-230, XP031629435, ISBN: 978-1-4244-4648-3
- STEFFEN ROHNER ET AL: "Modelling, simulation and analysis of a Modular Multilevel Converter for medium voltage applications", INDUSTRIAL TECHNOLOGY (ICIT), 2010 IEEE INTERNATIONAL CONFERENCE ON, IEEE, PISCATAWAY, NJ, USA, 14. März 2010 (2010-03-14), Seiten 775-782, XP031681086, ISBN: 978-1-4244-5695-6
- COLIN C DAVIDSON ET AL: "The future of high power electronics in Transmission and Distribution power systems", 13TH EUROPEAN CONFERENCE ON POWER ELECTRONICS AND APPLICATIONS, 2009 : EPE '09 ; 8 - 10 SEPT. 2009, BARCELONA, SPAIN, IEEE, PISCATAWAY, NJ, USA, 8. September 2009 (2009-09-08), Seiten 1-14, XP031541602, ISBN: 978-1-4244-4432-8
- HIROFUMI AKAGI: "Classification, terminology, and application of the modular multilevel cascade converter (MMCC)", 2010 INTERNATIONAL POWER ELECTRONICS CONFERENCE : IPEC-SAPPORO 2010 - [ECCE ASIA] ; SAPPORO, JAPAN, IEEE, PISCATAWAY, NJ, USA, 21. Juni 2010 (2010-06-21), Seiten 508-515, XP031728430, ISBN: 978-1-4244-5394-8
- KALLE ILVES ET AL: "Steady-State Analysis of Interaction Between Harmonic Components of Arm and Line Quantities of Modular Multilevel Converters", IEEE TRANSACTIONS ON POWER ELECTRONICS, IEEE SERVICE CENTER, PISCATAWAY, NJ, US, vol. 27, no. 1, 1 January 2012 (2012-01-01), pages 57-68, XP011389555, ISSN: 0885-8993, DOI: 10.1109/TPEL.2011.2159809
- ERTL H ET AL: "A Constant Output Current Three-Phase Diode Bridge Rectifier Employing a Novel Electronic Smoothing Inductor", IEEE TRANSACTIONS ON INDUSTRIAL ELECTRONICS, IEEE SERVICE CENTER, PISCATAWAY, NJ, USA, vol. 52, no. 2, 1 April 2005 (2005-04-01), pages 454-461, XP011129546, ISSN: 0278-0046, DOI: 10.1109/TIE.2005.843910

## Beschreibung

Die Erfindung betrifft einen modularen Schalter für einen elektrischen Umrichter, einen elektrischen Umrichter sowie ein Verfahren zum Betreiben eines elektrischen Umrichters.

Bei einem Umrichter handelt es sich um eine elektrische Schaltung, die zur Umformung von elektrischer Energie vorgesehen ist. Zur Zwischenspeicherung der elektrischen Energie ist ein an einer Gleichspannung anliegender Zwischenkreis vorhanden, der üblicherweise aus einem oder mehreren Kondensatoren aufgebaut ist. Parallel zu dem Zwischenkreis sind für jede Phase der Wechselspannung beispielsweise zwei in Reihe geschaltete, ansteuerbare Schalter vorhanden, denen jeweils eine Freilaufdiode zugeordnet sein kann. Diese Schalter werden derart angesteuert, dass an den Verbindungspunkten der Schalter eine Wechselspannung abgreifbar ist.

Beispielhaft kann es sich bei einem derartigen Umrichter um einen Gleichrichter oder einen Wechselrichter oder ganz allgemein um einen Stromrichter handeln.

Aus der DE 101 03 031 A1 ist eine Stromrichterschaltung bekannt, die pro Phase aus einer Mehrzahl von in Reihe geschalteten, gleichartigen Subsystemen aufgebaut ist. Jedes Subsystem weist einen Kondensator auf, zu dem zwei in Reihe geschaltete, ansteuerbare Schalter mit jeweils einer Freilaufdiode parallel geschaltet sind. Die Kondensatoren der Subsysteme einer Phase bilden somit den Zwischenkreis für diese Phase.

Aus MARQUARDT R: "Modular Multilevel Converter: An universal concept for HVDC-Networks and extended DC-Bus-applications", 2010 INTERNATIONAL POWER ELECTRONICS CONFERENCE ; SAPPORO, JAPAN ist eine weitere gattungsgleiche Stromrichterschaltung bekannt, in welcher die Subsysteme aus einer Vollbrückenstruktur bestehen.

Ein Nachteil dieser bekannten Stromrichterschaltungen besteht darin, dass die Kondensatoren in den einzelnen Subsystemen üblicherweise nicht denselben Ladezustand aufweisen, so dass auch die Spannungen an den Zwischenkreisen der Phasen nicht gleich sind. Dies führt im Betrieb, d.h. wenn die Schalter eingeschaltet sind, zu Umladevorgängen mit daraus resultierenden Schwingströmen zwischen den Phasen. Aufgabe der Erfindung ist es, einen elektrischen Umrichter zu schaffen, der die Nachteile des Stands der Technik nicht aufweist.

Die Erfindung löst diese Aufgabe durch einen elektrischen Umrichter mit modularen Schalten nach dem Anspruch 1, sowie durch ein Verfahren zum Betreiben eines elektrischen Umrichters nach dem Anspruch 10.

Der modulare Schalter für den erfindungsgemäßen Umrichter ist mit einer ersten Serienschaltung bestehend aus einem ersten steuerbaren Leistungshalbleiterbauelement und einer ersten Diode und mit einer zweiten Serienschaltung bestehend aus einer zweiten Diode und einem zweiten steuerbaren Leistungshalbleiterbauelement versehen. Der Verbindungspunkt des ersten Leistungshalbleiterbauelements und der ersten Diode bildet einen ersten Anschluss und der Verbindungspunkt der zweiten Diode und des zweiten Leistungshalbleiterbauelements bildet einen zweiten Anschluss des modularen Schalters. Es ist ein Kondensator vorgesehen, wobei die erste Serienschaltung und die zweite Serienschaltung und der Kondensator zueinander parallel geschaltet sind.

Der erfindungsgemäße elektrische Umrichter ist zur Umwandlung einer zwei- oder mehrphasigen Wechselspannung in eine steuerbare Gleichspannung vorgesehen. Der Umrichter ist mit einer Mehrzahl der vorgenannten modularen Schalter versehen, wobei für jede Phase der Wechselspannung zumindest zwei modulare Schalter in Reihe geschaltet sind. Die steuerbare Gleichspannung kann über die Schaltzustände der einzelnen modularen Schalter dynamisch sowohl positive, also auch negative Werte annehmen.

Der modulare Schalter ist nur für eine Stromrichtung konzipiert. In der entgegengesetzten Stromrichtung sperren die Leistungshalbleiterbauelemente den Stromfluss. Damit ist die Stromrichtung auch in dem erfindungsgemäßen Umrichter nicht umkehrbar. Dies bringt den Vorteil mit sich, dass - wenn überhaupt - nur Ausgleichsströme zwischen den Phasen des Umrichters entstehen können, jedoch keine Schwingströme.

Bei dem erfindungsgemäßen Verfahren werden die Leistungshalbleiterbauelemente der Phasen des Umrichters derart umgeschaltet, dass Abweichungen der Spannungen an den von den Kondensatoren gebildeten Zwischenkreisen der Phasen vermindert werden. Damit ist es möglich, die Spannungen an den von den Kondensatoren gebildeten Zwischenkreisen der Phasen des Umrichters derart zu beeinflussen, dass sie etwa gleich groß sind, dass also die Abweichungen dieser Spannungen möglichst gering sind. Auf diese Weise können Ausgleichsströme zwischen den einzelnen Phasen des Umrichters vermieden werden.

Bei einer vorteilhaften Ausführungsform der Erfindung ist die Anschlussspannung im Wesentlichen gleich der negativen oder der positiven Gleichspannung, wenn beide Leistungshalbleiterbauelemente ausgeschaltet oder eingeschaltet sind bzw. es ist die Anschlussspannung im Wesentlichen gleich Null, wenn eines der beiden Leistungshalbleiterbauelemente ausgeschaltet und das andere eingeschaltet ist. Auf diese Weise ist es in vorteilhafter Weise möglich, dass die Anschlussspannung entweder im Wesentlichen gleich der negativen Gleichspannung oder im Wesentlichen gleich der positiven Gleichspannung oder im Wesentlichen gleich Null ist.

Besonders zweckmäßig ist es, wenn den Leistungshalbleiterbauelementen jeweils eine Freilaufdiode parallel geschaltet ist. Dies dient dem Schutz der Leistungshalbleiterbauelemente.

Werden beispielsweise IGBTs (IGBT = insulated gate bipolar transistor) als Leistungshalbleiterbauelemente eingesetzt, so sind diese nur begrenzt sperrfähig. In diesem Fall kann es erforderlich sein, die Sperrfähigkeit der einzelnen IGBTs durch eine weitere, in Reihe geschaltete Diode zu erhöhen. Ebenfalls ist es möglich, die einzelnen IGBTs jeweils mit einer antiparallelen Freilaufdiode zu beschalten. Im letztgenannten Fall ist zwar ein Stromfluss in negativer Richtung möglich, jedoch führt dieser Stromfluss nur zu einer Aufladung des Kondensators bis zur anliegenden Anschlussspannung. Danach hört der Stromfluss auf und der Umladevorgang ist beendet. Auch mit Freilaufdioden können somit Schwingströme zwischen den Phasen eines aus mehreren modularen Schaltern aufgebauten Umrichters vermieden werden.

Mit Hilfe der modularen Schalter können nahezu beliebige Multi-level- bzw. Mehrpunkt-Umrichter in modularer Weise aufgebaut werden. Beispielsweise können Multi-Level-Umrichter mit drei oder mit fünf Arbeitspunkten mit Hilfe der modularen Schalter realisiert werden. Durch den modularen Aufbau werden der Aufwand und damit auch die Kosten für die Realisierung derartiger Multi-Level-Umrichter vermindert.

Weitere Merkmale, Anwendungsmöglichkeiten und Vorteile der Erfindung ergeben sich aus der nachfolgenden Beschreibung von Ausführungsbeispielen der Erfindung, die in den zugehörigen Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

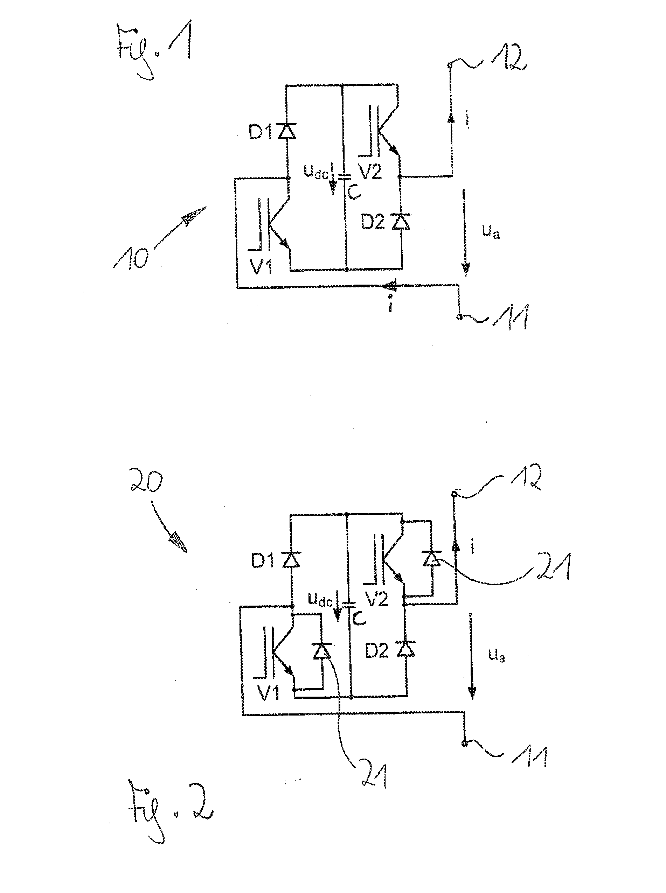

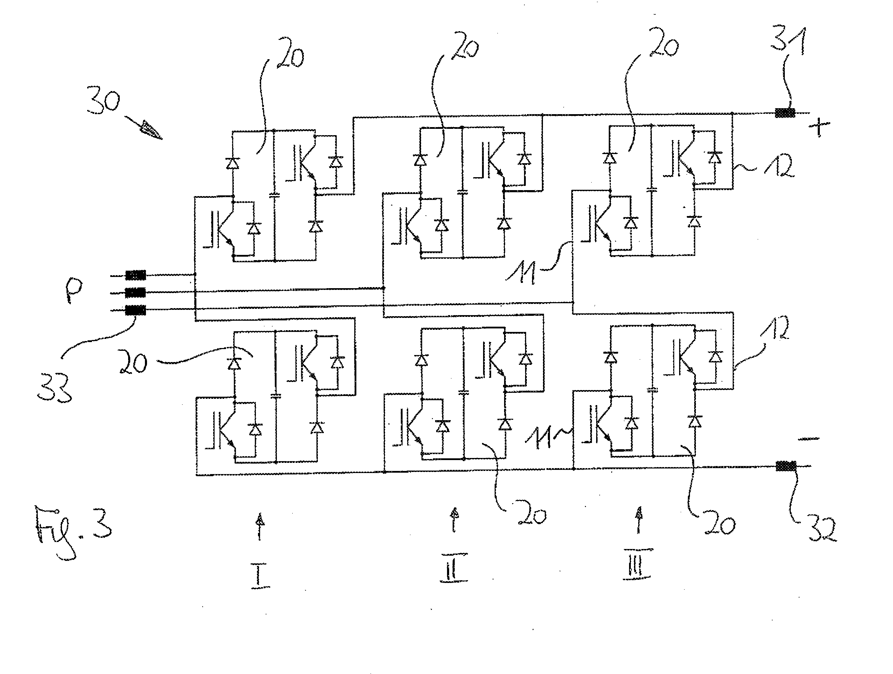

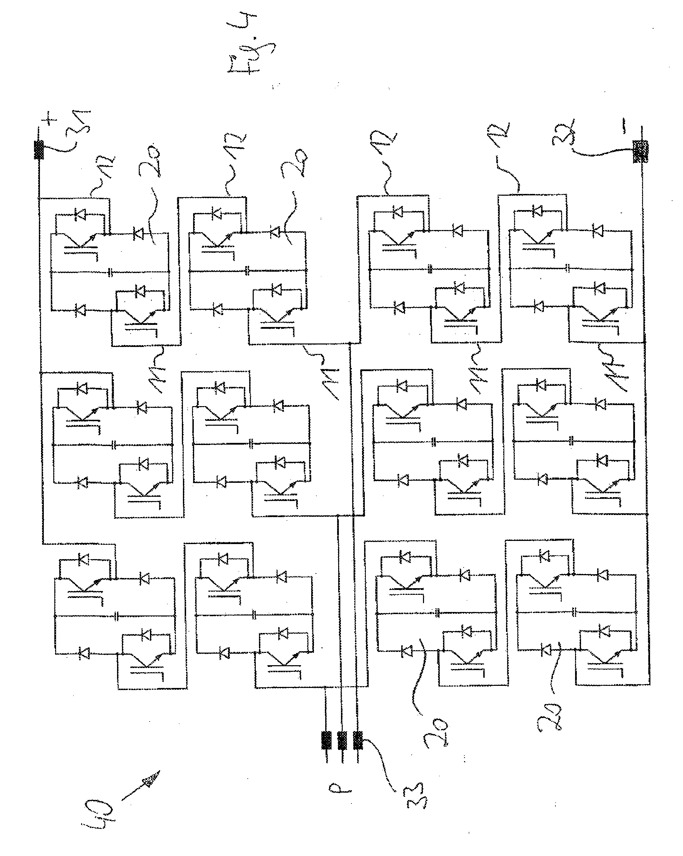

Figur 1 zeigt einen elektrischen Schaltplan eines Beispiels eines modularen Schalters für einen elektrischen Umrichter, Figur 2 zeigt den Schaltplan der Figur 1 mit ergänzten Bauelementen, und Figuren 3 und 4 zeigen jeweils einen elektrischen Schaltplan eines Ausführungsbeispiels eines elektrischen Umrichters unter Verwendung des modularen Schalters der Figur 2.

In der Figur 1 ist ein modularer Schalter 10 dargestellt, der zur Verwendung in einem elektrischen Umrichter vorgesehen ist.

Der modulare Schalter 10 weist eine erste Serienschaltung bestehend aus einem ersten steuerbaren Leistungshalbleiterbauelement V1 und einer ersten Diode D1 sowie eine zweite Serienschaltung bestehend aus einer zweiten Diode D2 und einem zweiten steuerbaren Leistungshalbleiterbauelement V2 auf. Den beiden steuerbaren Leistungshalbleiterbauelementen V1, V2 kann jeweils eine Diode zum Zwecke der Erhöhung der Sperrfähigkeit in Serie geschaltet sein.

Bei der ersten Serienschaltung sind der Kollektor des ersten Leistungshalbleiterbauelements V1 und die Anode der ersten Diode D1 miteinander verbunden. Dieser Verbindungspunkt ist als erster Anschluss 11 bezeichnet. Bei der zweiten Serienschaltung sind der Emitter des zweiten Leistungshalbleiterbauelements V2 und die Kathode der zweiten Diode D2 miteinander verbunden. Dieser Verbindungspunkt ist als zweiter Anschluss 12 bezeichnet.

Die beiden Serienschaltungen sind zueinander parallel geschaltet. Damit ist die Kathode der ersten Diode D1 mit dem Kollektor des zweiten Leistungshalbleiterbauelements V2 und der Emitter des ersten Leistungshalbleiterbauelements V1 mit der Anode der zweiten Diode D2 verbunden.

Zu den beiden parallel geschalteten Serienschaltungen ist ein Kondensator C parallel geschaltet.

An dem Kondensator C liegt eine Gleichspannung u_{dc} an und zwischen den beiden Anschlüssen 11, 12 ist eine Anschlussspannung uₐ vorhanden. Die Richtung der vorgenannten Spannungen ist in der Figur 1 angegeben. Weiterhin fließt von dem ersten Anschluss 11 ein Strom i in Richtung zu dem zweiten Anschluss 12.

Bei den Leistungshalbleiterbauelementen V1, V2 handelt es sich um steuerbare Schalter, beispielsweise um Transistoren, insbesondere Feldeffekttransistoren, oder um Thyristoren mit gegebenenfalls erforderlicher Hilfsbeschaltung, insbesondere GTO-Thyristoren (GTO = gate turn off), oder um IGBTs (IGBT = insulated gate bipolar transistor), oder um vergleichbare elektronische Bauelemente. In Abhängigkeit von der Ausgestaltung der Leistungshalbleiterbauelemente V1, V2 können die Anschlüsse derselben unterschiedliche Bezeichnungen haben. Die vorstehenden Bezeichnungen Kollektor und Emitter beziehen sich auf die beispielhafte Verwendung von IGBTs. Der Kondensator C kann unipolar ausgebildet sein. Der modulare Schalter 10 kann vier Zustände einnehmen:
- Wenn die Leistungshalbleiterbauelemente V1, V2 beide ausgeschaltet (sperrend) sind, dann fließt der Strom i von dem ersten Anschluss 11 über die Diode D1, über den Kondensator C und über die Diode D2 zu dem zweiten Anschluss 12. Der Kondensator C wird von diesem Strom i geladen, so dass die Gleichspannung u_{dc} größer wird. Abgesehen von den Spannungsabfällen an den Dioden D1, D2 ist die Anschlussspannung uₐ gleich der negativen Gleichspannung -u_{dc}, also uₐ = -u_{dc}.
- Wenn die Leistungshalbleiterbauelemente V1, V2 beide eingeschaltet (leitend) sind, dann fließt der Strom i von dem ersten Anschluss 11 über das erste Leistungshalbleiterbauelement V1, über den Kondensator C und über das zweite Leistungshalbleiterbauelement V2 zu dem zweiten Anschluss 12. Der Kondensator C wird von diesem Strom i entladen, so dass die Gleichspannung u_{dc} kleiner wird. Abgesehen von den Spannungsabfällen an den Leistungshalbleiterbauelementen V1, V2 ist die Anschlussspannung uₐ gleich der positiven Gleichspannung u_{dc}, also uₐ = u_{dc}.
- Wenn das erste Leistungshalbleiterbauelement V1 eingeschaltet (leitend) und das zweite Leistungshalbleiterbauelement V2 ausgeschaltet (sperrend) ist, dann fließt der Strom i von dem ersten Anschluss 11 über das erste Leistungshalbleiterbauelement V1 und über die zweite Diode D2 zu dem zweiten Anschluss 12. Die Gleichspannung u_{dc} an dem Kondensator C bleibt konstant. Abgesehen von den Spannungsabfällen an dem ersten Leistungshalbleiterbauelement V1 und der zweiten Diode D2 ist die Anschlussspannung uₐ gleich Null, also uₐ = 0.
- Wenn das erste Leistungshalbleiterbauelement V1 ausgeschaltet (sperrend) und das zweite Leistungshalbleiterbauelement V2 eingeschaltet (leitend) ist, dann fließt der Strom i von dem ersten Anschluss 11 über die erste Diode D1 und das zweite Leistungshalbleiterbauelement V2 zu dem zweiten Anschluss 12. Die Gleichspannung u_{dc} an dem Kondensator C bleibt konstant. Abgesehen von den Spannungsabfällen an der ersten Diode D1 und dem zweiten Leistungshalbleiterbauelement V2 ist die Anschlussspannung uₐ gleich Null, also uₐ = 0.

Der Strom i durch den modularen Schalter 10 ist immer in dieselbe Richtung gerichtet. Diese Richtung ist dabei durch die Dioden D1, D2 vorgegeben. Die Anschlussspannung uₐ kann im Wesentlichen drei Werte annehmen, und zwar uₐ = -u_{dc} oder uₐ = u_{dc} oder uₐ = 0. Die Gleichspannung u_{dc} am Kondensator C kann größer oder kleiner werden.

In der Figur 2 ist ein modularer Schalter 20 dargestellt, der alle Bauelemente des modularen Schalters 10 der Figur 1 aufweist, und der hinsichtlich seines schaltungstechnischen Aufbaus mit dem modularen Schalter 10 der Figur 1 übereinstimmt. Übereinstimmende Bauelemente des modularen Schalters 20 der Figur 2 sind deshalb in gleicher Weise gekennzeichnet wie bei dem modularen Schalter 10 der Figur 1. Insoweit wird auf die vorstehende Beschreibung des modularen Schalters 10 der Figur 1 verwiesen.

Ergänzend zu dem modularen Schalter 10 der Figur 1 weist der modulare Schalter 20 der Figur 2 jeweils eine Freilaufdiode 21 zu den beiden Leistungshalbleiterbauelementen V1, V2 auf. Es wird aber ausdrücklich darauf hingewiesen, dass diese Freilaufdioden 21 an sich für den Betrieb des modularen Schalters 20 der Figur 2 nicht erforderlich sind, dass der modulare Schalter 20 also auch ohne die Freilaufdioden 21 - also in der anhand des modularen Schalters 10 der Figur 1 erläuterten Weise - vollständig funktionsfähig ist.

In der Praxis wird man jedoch die Freilaufdioden 21 zum Schutz der Leistungshalbleiterbauelemente V1, V2 vorsehen. Mit Hilfe der Freilaufdioden 21 können mögliche Schäden an den Leistungshalbleiterbauelementen V1, V2 bei einer ungewollten Stromrichtungsumkehr des Stroms i verhindert werden.

Im Normalfall fließt der Strom i in positiver Richtung des in der Figur 2 angegebenen Strompfeils. Kehrt sich der Strom i jedoch um, so fließt er über die Freilaufdioden 21. Die Anschlussspannung uₐ wird zu uₐ = + u_{dc} und der Kondensator C wird geladen. In diesem Fall spielt der Schaltzustand der Leistungshalbleiterbauelemente V1, V2 keine Rolle.

Weiterhin kann mit Hilfe der Freilaufdioden 21 erreicht werden, dass an dem Kondensator C keine Spannungsumkehr eintreten kann, so dass - sofern erwünscht - ein unipolarer Kondensator zum Einsatz kommen kann.

In der Figur 3 ist ein elektrischer Umrichter 30 dargestellt, der unter Verwendung des modularen Schalters 20 der Figur 2 aufgebaut ist. Es handelt sich dabei um einen sogenannten Multi-Level- oder Mehrpunkt-Umrichter, der im vorliegenden Fall der Figur 3 drei Arbeitspunkte besitzt.

Der Umrichter 30 ist beispielhaft für den Anschluss einer dreiphasigen Wechselspannung ausgebildet, wobei die jeweiligen Bauelemente der drei Phasen mit I, II, III gekennzeichnet sind. Es versteht sich, dass der Umrichter 30 auch zweiphasig oder ganz allgemein mehrphasig ausgebildet sein kann.

Jeder Phase des Umrichters 30 sind zwei modulare Schalter 20 zugeordnet.

Wie anhand der Phase III des Umrichters 30 gezeigt ist, ist der Anschluss 11 des ersten, oberen Schalters 20 mit dem Anschluss 12 des zweiten, unteren Schalters 20 verbunden. Weiterhin ist der Anschluss 12 des ersten, oberen Schalters 20 über eine erste Zwischenkreisinduktivität 31 mit einem Pluspol + und der Anschluss 11 des zweiten, unteren Schalters 20 über eine zweite Zwischenkreisinduktivität 32 mit einem Minuspol - verbunden. Es ist auch möglich, dass nur einer der beiden Zwischenkreisinduktivitäten 31, 32 vorhanden ist.

Zwischen dem Plus- und dem Minuspol liegt eine Gleichspannung an. Die Gleichspannung kann unterschiedliche Werte aufweisen und kann insbesondere positiv oder auch negativ sein. Die Gleichspannung kann auch durch einen anderen Umrichter erzeugt werden, der dem Umrichter 30 der Figur 3 entgegen geschaltet ist. Dieser andere Umrichter kann dabei gleichartig wie der Umrichter 30 ausgebildet sein.

Der Verbindungspunkt der beiden modularen Schalter 20 ist über eine Induktivität 33 zu einem Anschluss P geführt, an dem die Phasen der Wechselspannung anliegen.

Jeder der modularen Schalter 20 ist über eine parasitäre Induktivität mit den Zwischenkreisinduktivitäten 31, 32 verbunden. Diese parasitären Induktivitäten können auch diskret ausgebildet sein. Die parasitären Induktivitäten sind insbesondere für die Strombegrenzung bei möglichen Ausgleichsvorgängen hilfreich.

Im Hinblick auf die anderen beiden Phasen I, II ist der Umrichter 30 entsprechend aufgebaut. Die Induktivitäten 33 der drei Phasen können dann beispielsweise durch eine Drehstromdrossel realisiert sein. Die Induktivitäten 33 können aber auch durch eine angeschlossene induktive Last oder einen Transformator realisiert werden.

Wie erläutert wurde, kann die Anschlussspannung uₐ jedes modularen Schalters 20 im Wesentlichen drei Zustände einnehmen: uₐ = -u_{dc} oder uₐ = u_{dc} oder uₐ = 0. Damit kann die Spannung jeder Phase des Anschlusses P gegenüber dem Plus- oder dem Minuspol ebenfalls im Wesentlichen diese drei vorgenannten Zustände einnehmen.

Bei einer an dem Anschluss P vorgegebenen Wechselspannung kann durch eine entsprechende Ansteuerung der Leistungshalbleiterbauelemente V1, V2 der einzelnen modularen Schalter 20 eine Gleichspannung zwischen dem Plus- und dem Minuspol erzeugt werden.

Der Ladezustand der Kondensatoren C in den einzelnen modularen Schaltern 20 kann aufgrund der möglichen Be- und Entladung der Kondensatoren C voneinander abweichen. Daraus ergibt sich, dass auch die Spannungen an den von den jeweiligen Kondensatoren C gebildeten Zwischenkreisen der einzelnen Phasen gegebenenfalls nicht gleich sind. Dies kann zu Umladevorgängen zwischen den Phasen führen.

Durch eine entsprechende Ansteuerung der Leistungshalbleiterbauelemente V1, V2, insbesondere durch entsprechende Umschaltungen der Leistungshalbleiterbauelemente V1, V2 der modularen Schalter 20 der einzelnen Phasen des Umrichters 30 kann eine Abweichung der Spannungen an den von den jeweiligen Kondensatoren C gebildeten Zwischenkreisen der einzelnen Phasen vermindert werden.

Dies kann beispielsweise dadurch erreicht werden, dass die Zeitdauer, während der beide Leistungshalbleiterbauelemente V1, V2 eines der modularen Schalter 20 ein- oder ausgeschaltet sind, verlängert oder verkürzt wird. Durch diese Maßnahme wird - wie erläutert wurde - die Gleichspannung u_{dc} an dem zugehörigen Kondensator C vergrößert oder verkleinert.

Alternativ kann dies beispielweise dadurch erreicht werden, dass die Leistungshalbleiterbauelemente V1, V2 der einzelnen modularen Schalter 20 in redundante Schaltzustände umgeschaltet werden, die ausgangsseitig gleichwirkend sind.

Die verbleibenden, gegebenenfalls noch auftretenden Umladevorgänge führen zu keinen Schwingströmen zwischen den Phasen. Dies ergibt sich daraus, dass - wie erläutert wurde - in den einzelnen modularen Schaltern 20 der Strom i nur in eine Richtung fließen kann. Mögliche Umladevorgänge können somit nur zu Ausgleichsströmen in einer Richtung führen, nicht jedoch zu einer Stromumkehr und damit auch nicht zu Schwingströmen.
In der Figur 4 ist ein elektrischer Umrichter 40 dargestellt, der unter Verwendung des modularen Schalters 20 der Figur 2 aufgebaut ist. Es handelt sich dabei um einen sogenannten Multi-Level- oder Mehrpunkt-Umrichter, der im vorliegenden Fall der Figur 4 fünf Arbeitspunkte besitzt.

Der Umrichter 40 ist beispielhaft für den Anschluss einer dreiphasigen Wechselspannung ausgebildet. Es versteht sich, dass der Umrichter 40 auch zweiphasig oder ganz allgemein mehrphasig ausgebildet sein kann.

Jeder Phase des Umrichters 40 sind vier modulare Schalter 20 zugeordnet. Die vier Schalter 20 jeder Phase sind über ihre Anschlüsse 11, 12 in entsprechender Weise miteinander verbunden, wie dies anhand des Umrichters 30 der Figur 3 bereits erläutert worden ist, und wie dies in der Figur 4 dargestellt ist. Ebenfalls sind die Schalter 20 jeder Phase in entsprechender Weise über die Zwischenkreisinduktivität/en 31, 32 und die Induktivitäten 33 mit dem Pluspol + und dem Minuspol - sowie mit dem Anschluss P verbunden.

Wie erläutert wurde, kann die Anschlussspannung uₐ jedes modularen Schalters 20 im Wesentlichen drei Zustände einnehmen: uₐ = -u_{dc} oder uₐ = u_{dc} oder uₐ = 0. Damit kann die Spannung jeder Phase des Anschlusses P gegenüber dem Plus- oder dem Minuspol insgesamt im Wesentlichen fünf Zustände einnehmen, und zwar: uₐ = -2u_{dc} oder uₐ = -u_{dc} oder uₐ = 0 oder uₐ = u_{dc} oder u_{a =} 2u_{dc}.
Im Übrigen wird im Hinblick auf den Umrichter 40 der Figur 4 auf die Erläuterungen zu dem Umrichter 30 der Figur 3 verwiesen.

## Patentansprüche

1. Elektrischer Umrichter (30, 40) zur Umwandlung einer zwei- oder mehrphasigen Wechselspannung in eine Gleichspannung aufweisend eine Mehrzahl von modularen Schaltern (10, 20), wobei für jede Phase der Wechselspannung zumindest zwei modulare Schalter (10, 20) in Reihe geschaltet sind, der modulare Schalter (10, 20) bestehend aus einer ersten Serienschaltung mit einem ersten steuerbaren Leistungshalbleiterbauelement (V1) und einer ersten Diode (D1) und bestehend aus einer zweiten Serienschaltung mit einer zweiten Diode (D2) und einem zweiten steuerbaren Leistungshalbleiterbauelement (V2), wobei der Verbindungspunkt des ersten Leistungshalbleiterbauelements (V1) und der ersten Diode (D1) einen ersten Anschluss (11) und der Verbindungspunkt der zweiten Diode (D2) und des zweiten Leistungshalbleiterbauelements (V2) einen zweiten Anschluss (12) des modularen Schalters (10, 20) bildet, und wobei zwischen den Anschlüssen (11, 12) ein Strom (i) in nur eine Richtung fließen kann, und mit einem Kondensator (C), wobei die erste Serienschaltung und die zweite Serienschaltung und der Kondensator (C) zueinander parallel geschaltet sind.

2. Elektrischer Umrichter (30, 40) nach Anspruch 1, wobei bei der ersten Serienschaltung der Kollektor des ersten Leistungshalbleiterbauelements (V1) und die Anode der ersten Diode (D1) miteinander verbunden sind, und wobei bei der zweiten Serienschaltung der Emitter des zweiten Leistungshalbleiterbauelements (V2) und die Kathode der zweiten Diode (D2) miteinander verbunden sind.

3. Elektrischer Umrichter (30, 40) nach einem der vorstehenden Ansprüche, wobei an dem Kondensator (C) eine Kondensatorgleichspannung (U_{dc}) vorhanden ist, und wobei zwischen den beiden Anschlüssen (11, 12) eine Anschlussspannung (uₐ) vorhanden ist, die entweder im Wesentlichen gleich der negativen Kondensatorgleichspannung oder im Wesentlichen gleich der positiven Kondensatorgleichspannung oder im Wesentlichen gleich Null ist.

4. Elektrischer Umrichter (30, 40) nach Anspruch 3, wobei die Anschlussspannung (uₐ) im Wesentlichen gleich der negativen oder der positiven Kondensatorgleichspannung (U_{dc}) ist, wenn beide Leistungshalbleiterbauelemente (V1, V2) ausgeschaltet oder eingeschaltet sind.

5. Elektrischer Umrichter (30, 40) nach Anspruch 3 oder 4, wobei die Anschlussspannung (uₐ) im Wesentlichen gleich Null ist, wenn eines der beiden Leistungshalbleiterbauelemente (V1, V2) ausgeschaltet und das andere eingeschaltet ist.

6. Elektrischer Umrichter (30, 40) nach einem der vorstehenden Ansprüche, wobei den Leistungshalbleiterbauelementen (V1, V2) jeweils eine Freilaufdiode (21) parallel geschaltet ist.

7. Elektrischer Umrichter (30, 40) nach einem der vorstehenden Ansprüche, wobei den Leistungshalbleiterbauelementen (V1, V2) zur Erhöhung der Sperrfähigkeit jeweils eine Diode in Serie geschaltet ist.

8. Elektrischer Umrichter (30, 40) nach einem der vorstehenden Ansprüche, wobei die in Reihe geschalteten modularen Schalter (10, 20) jeder Phase über zumindest eine Zwischenkreisinduktivität (31, 32) an einen Pluspol (+) und einen Minuspol (-) der Gleichspannung angeschlossen sind.

9. Elektrischer Umrichter (30, 40) nach einem der vorstehenden Ansprüche, wobei ein Verbindungspunkt der modularen Schalter (10, 20) jeder Phase über eine Induktivität (33) an einen Anschluss (P) der Wechselspannung angeschlossen sind.

10. Verfahren zum Betreiben eines elektrischen Umrichters (30, 40) nach einem der vorstehenden Ansprüche, wobei die Leistungshalbleiterbauelemente (V1, V2) der Phasen des Umrichters (30, 40) derart umgeschaltet werden, dass Abweichungen der Spannungen an den von den Kondensatoren (C) gebildeten Zwischenkreisen der Phasen vermindert werden, wobei die Zeitdauer, während der beide Leistungshalbleiterbauelemente (V1, V2) eines der modularen Schalter (20) ein- oder ausgeschaltet sind, verlängert oder verkürzt wird.

11. Verfahren nach Anspruch 10, wobei die Leistungshalbleiterbauelemente (V1, V2) eines der modularen Schalter (20) in Schaltzustände umgeschaltet werden, die ausgangsseitig gleichwirkend sind.

## Claims

1. Electric converter (30, 40) for converting a two-phase or multi-phase alternate voltage into a direct voltage, comprising a plurality of modular switches (10, 20), wherein, for each phase of the alternate voltage, at least two modular switches (10, 20) are connected in series, said modular switch (10, 20) comprising a first series circuit with a first controllable power semi-conductor component (V1) and a first diode (D1) and comprising a second series circuit with a second diode (D2) and a second controllable power semi-conductor component (V2), wherein the connecting point of the first power semi-conductor component (V1) and the first diode (D1) form a first connection (11) and the connecting point of the second diode (D2) and the second power semi-conductor component (V2) form a second connection (12) of the modular switch (10, 20), and wherein, between the connections (11, 12), a current (i) can flow in only one direction, and comprising a capacitor (C), in which case the first series circuit and the second series circuit and the capacitor (C) are connected in parallel.

2. Electric converter (30, 40) as in Claim 1, wherein, in the first series circuit, the collector of the first power semi-conductor component (V1) and the anode of the first diode (D1) are connected to each other, and wherein, in the second series circuit, the emitter of the second power semi-conductor component (V2) and the cathode of the second diode (D2) are connected to each other.

3. Electric converter (30, 40) as in one of the previous claims, wherein, applied to the capacitor (C), there is a capacitor direct voltage (U_{dc}) and wherein there is a terminal voltage (Uₐ) between the two connections (11, 12), said terminal voltage being essentially either equal to the negative capacitor direct voltage or essentially equal to the positive capacitor direct voltage or essentially equal to zero.

4. Electric converter (30, 40) as in Claim 3, wherein the terminal voltage (Uₐ) is essentially equal to the negative or the positive capacitor direct voltage (U_{dc}) when both power semi-conductor components (V1, V2) are switched off or switched on.

5. Electric converter (30, 40) as in Claim 3 or 4, wherein the terminal voltage (Uₐ) is essential equal to zero when one of the two power semi-conductor components (V1, V2) is switched off and the other is switched on.

6. Electric converter (30, 40) as in one of the previous claims, wherein one freewheeling diode (21) is connected in parallel to each of the power semi-conductor components (V1, V2).

7. Electric converter (30, 40) as in one of the previous claims, wherein one diode is connected in series to each of the power semi-conductor elements (V1, V2) in order to increase blocking capability.

8. Electric converter (30, 40) as in one of the previous claims, wherein the series-connected modular switches (10, 20) of each phase are connected, via at least one intermediate circuit inductance (31, 32) to one positive pole (+) and one negative pole (-) of the direct voltage.

9. Electric converter (30, 40) as in one of the previous claims, wherein one connecting point of the modular switch (10, 20) of each phase is connected, via an inductance (33), to one connecting point (P) of the alternate voltage.

10. Method for operating an electric converter (30, 40) as in one of the previous claims, wherein the power semi-conductor components (V1, V2) of the phases of the converter (30, 40) are reversed in such a manner that deviations of the voltages on the intermediate circuits of the phases formed by the capacitors (C) are decreased, in which case the duration of time, during which both power semi-conductor components (V1, V2) of one of the modular switches (20) are switched on or off, is extended or shortened.

11. Method as in Claim 10, wherein the power semi-conductor components (V1, V2) of one of the modular switches (20) are switched into switching states that have the same effect on the output side.

## Revendications

1. Convertisseur électrique (30, 40) pour la conversion d'une tension alternative diphasée ou polyphasée en une tension continue comprenant une pluralité de commutateurs (10, 20) modulaires, dans lequel, pour chaque phase de la tension alternative, au moins deux commutateurs (10, 20) modulaires sont montés en série, le commutateur (10, 20) modulaire étant formé d'un premier montage série avec un premier composant semi-conducteur de puissance (V1) commandé et une première diode (D1) et d'un deuxième montage série avec un deuxième composant semi-conducteur de puissance (V2) commandé et une deuxième diode (D2), le point de connexion du premier composant semi-conducteur de puissance (V1) commandé et de la première diode (D1) formant une première borne (11) et le point de connexion du deuxième composant semi-conducteur de puissance (V2) commandé et de la deuxième diode (D2) formant une deuxième borne (12) du commutateur (10, 20) modulaire, un courant (i) ne pouvant circuler que dans un sens entre les bornes (10, 20), et avec condensateur (C), le premier montage série et le deuxième montage série et le condensateur (C) étant montés en parallèle

2. Convertisseur électrique (30, 40) selon la revendication 1, dans lequel, dans le premier montage série, le collecteur du premier composant semi-conducteur de puissance (V1) et l'anode de la première diode (D1) sont connectés entre eux et dans lequel, dans le deuxième montage série, l'émetteur du deuxième composant semi-conducteur de puissance (V2) et la cathode de la deuxième diode (D2) sont connectés entre eux.

3. Convertisseur électrique (30, 40) selon une des revendications précédentes, dans lequel on a au niveau du condensateur (C) une tension continue de condensateur (U_{dc}) et dans lequel on a entre les deux bornes (11, 12) une tension de bornes (Uₐ) qui est soit essentiellement égale à la tension continue de condensateur négative, soit essentiellement égale à la tension continue de condensateur positive, soit essentiellement nulle.

4. Convertisseur électrique (30, 40) selon la revendication 3, dans lequel la tension de bornes (Uₐ) est essentiellement égale à la tension continue de condensateur (U_{dc}) négative ou positive lorsque les deux composants semi-conducteurs de puissance (V1, V2) sont bloquants ou passants.

5. Convertisseur électrique (30, 40) selon la revendication 3 ou 4, dans lequel la tension de bornes (Uₐ) est essentiellement nulle, lorsque l'un des deux composants semi-conducteurs de puissance (V1, V2) est bloquant et l'autre passant.

6. Convertisseur électrique (30, 40) selon une des revendications précédentes, dans lequel une diode roue libre (21) est montée en parallèle avec chacun des composants semi-conducteurs de puissance (V1, V2).

7. Convertisseur électrique (30, 40) selon une des revendications précédentes, dans lequel, pour augmenter la capacité de blocage, une diode roue est montée en série avec chacun des composants semi-conducteurs de puissance (V1, V2).

8. Convertisseur électrique (30, 40) selon une des revendications précédentes, dans lequel les commutateurs modulaires (10, 20) montés en série de chaque phase sont connectés via au moins une inductance de circuit intermédiaire (31, 32) à un pôle positif (+) et un pôle négatif (-) de la tension continue.

9. Convertisseur électrique (30, 40) selon une des revendications précédentes, dans lequel un point de connexion des commutateurs modulaires (10, 20) de chaque phase est connecté via une inductance (33) à une borne (P) de la tension alternative.

10. Procédé de fonctionnement d'un convertisseur électrique (30, 40) selon une des revendications précédentes, dans lequel les composants semi-conducteurs de puissance (V1, V2) des phases du convertisseur (30, 40) sont commutés de manière à atténuer les fluctuations des tensions au niveau des circuits intermédiaires des phases formés par les condensateurs (C), le temps pendant lequel les deux composants semi-conducteurs de puissance (V1, V2) de l'un des commutateurs modulaires (20) sont passants ou bloquants pouvant être augmenté ou raccourci.

11. Procédé selon la revendication 10, selon lequel les composants semi-conducteurs de puissance (V1, V2) de l'un des commutateurs modulaires (20) sont amenés dans des états de commutation qui ont la même action côté sortie.
